# EUROPÄISCHE PATENTANMELDUNG

(11) **EP 0 595 100 A1**
(43) Veröffentlichungstag der Anmeldung: **04.05.1994**
(21) Anmeldenummer: 93116442.0
(22) Anmeldetag: 11.10.1993
(51) Int. Cl.: C01B 3/50, C01B 3/56, C01B 31/18, B01D 53/22

(54) **Verfahren zum Gewinnen eines hochreinen Wasserstoff- und eines hochreinen Kohlenmonoxidstromes**

(30) Priorität: 27.10.1992 DE 4236263
(71) Anmelder: Linde Aktiengesellschaft, D-65189 Wiesbaden (DE)
(72) Erfinder: Förg, Wolfgang, Dipl.-Phys., D-82057 Icking (DE)
(74) Vertreter: Kasseckert, Rainer

(57) **Zusammenfassung**

Verfahren zum Zerlegen eines aus einem Steamreformer (A) stammenden, im wesentlichen Wasserstoff, Kohlenmonoxid und Kohlendioxid enthaltenden Einsatzgasstromes (2) in einen hochreinen Wasserstoff- und einen hochreinen Kohlenmonoxidstrom, wobei der Einsatzgasstrom in einer Amin-Wäsche (B) weitgehend von Kohlendioxid gereinigt wird. Anschließend wird der nunmehr im wesentlichen Wasserstoff und Kohlenmonoxid enthaltende Gasstrom zunächst einer Druckwechseladsorption (C) zugeführt und in dieser ein hochreiner Wasserstoffstrom gewonnen. Der in der Druckwechseladsorption anfallende Abgasstrom wird ein- oder mehrstufig verdichtet (E) und einer Membrantrennanlage (F) zugeführt und in dieser ein hochreiner Kohlenmonoxidstrom (8) gewonnen.

Die Membrantrennanlage kann zweistufig ausgeführt sein.

## Beschreibung

Die Erfindung betrifft ein Verfahren zum Zerlegen eines aus einem Steamreformer stammenden, im wesentlichen Wasserstoff, Kohlenmonoxid und Kohlendioxid enthaltenden Einsatzgasstromes in einen hochreinen Wasserstoff- und einen hochreinen Kohlenmonoxidstrom, wobei der Einsatzgasstrom in einer Amin-Wäsche weitgehend von Kohlendioxid gereinigt wird.

Verfahren zur Herstellung von hochreinem Wasserstoff und hochreinem Kohlenmonoxid bestehen normalerweise aus einem Steamreformer, einer Amin-Wäsche zur Kohlendioxid-Abtrennung und einem Tieftemperaturprozess zur Wasserstoff-Kohlenmonoxid-Trennung und Gewinnung beider Ströme. Dabei wird als Einsatzgas für den Steamreformer in der Regel Erdgas oder ein Gemisch aus (höheren) Kohlenwasserstoffen verwendet. Aus der DE-OS 37 41 906 ist ein Verfahren zur Gewinnung von Wasserstoff und Kohlenmonoxid aus einem diese Stoffe und Methan enthaltenden Synthesegas bekannt. Dabei wird das Synthesegas einer Wäsche mit flüssigem Methan unterworfen und der Wasserstoff von den anderen Komponenten befreit, gasförmig am Kopf der Wäsche abgezogen und die hauptsächlich aus Methan und Kohlenmonoxid bestehende flüssige Sumpffraktion rektifikatorisch in eine Kohlenmonoxid-Kopffraktion und eine Methan-Sumpffraktion zerlegt. Zusätzlich wird der flüssigen Kohlenmonoxid/Methan-Fraktion der Methanwäsche vor der rektifikatorischen Zerlegung ein Methan enthaltendes Gas zugemischt. Einen Überblick über weitere Varianten der rektifikatorischen Trennung eines im wesentlichen Wasserstoff und Kohlenmonoxid enthaltenden Gasstromes gibt der Artikel "Fortschritte bei der H₂/CO-Tieftemperaturzerlegung" von Dr. R. Berninger in LINDE BERICHTE aus Technik und Wissenschaft, Nr. 62, 1988, Seite 18 bis 23.

Rektifikatorische Trennprozesse sind jedoch sehr investitions- und betriebskostenintensiv. Sie sind fernen schwer anzufahren und führen darüberhinaus nach Störungen innerhalb des Prozesses zu größeren Produktverlusten.

Ziel und Aufgabe der vorliegenden Erfindung ist es, ein Verfahren zum Zerlegen eines aus einem Steamreformer stammenden, von Kohlendioxid befreiten, im wesentlichen Wasserstoff und Kohlenmonoxid enthaltenden Gasstromes in einen hochreinen Wasserstoff- und einen hochreinen Kohlenmonoxidstrom zu schaffen, das zum einen weniger kostenintensiv als die bisherigen Tieftemperaturverfahren ist und zum anderen Produktverluste in der Anfahrphase nach Störungen vermeidet.

Dies wird erfindungsgemäß dadurch erreicht, daß
a) der nunmehr im wesentlichen Wasserstoff und Kohlenmonoxid enthaltende Gasstrom zunächst einer Druckwechseladsorption zugeführt und in dieser ein hochreiner Wasserstoffstrom gewonnen wird, und
b) der in der Druckwechseladsorption anfallende Abgasstrom ein- oder mehrstufig verdichtet und einer Membrantrennanlage zugeführt und in dieser ein hochreiner Kohlenmonoxidstrom gewonnen wird.

Die Kombination aus Steamreformer, Amin-Wäsche zur Kohlendioxid-Abtrennung, Druckwechseladsorption und Membran-Trennanlage führt zu einem sehr leicht zu betreibenden und schnell anzufahrenden Verfahren. Der Wasserstoffstrom aus der Druckwechseladsorption kann je nach Wahl des Druckwechseladsorptionsverfahrens mit einer Reinheit von nahezu 100 % gewonnen werden. Als Druckwechseladsorptionsverfahren findet vorzugsweise ein 5-Adsorber-Verfahren mit zwei aufeinanderfolgenden Druckausgleichsschritten - wie z.B. in der US-A 3 564 816 beschrieben - Verwendung. Während Wasserstoff die schwerer adsorbierbare Komponente darstellt, werden Kohlenmonoxid und die restlichen noch im Gas verbliebenen Komponenten adsorbiert und anschliessend mittels Drucksenkung desorbiert. Zur vollständigen Reinigung der Adsorber kann vor dem Wiederaufdrücken mit dem Einsatzgasstrom ein Spülen der Adsorber mit einem Teil der Wasserstoffproduktfraktion folgen. Das während der Desorptionsschritte anfallende Abgas wird nun ein- oder mehrstufig verdichtet. Die Anzahl der Verdichterstufen hängt im wesentlichen von der Druckdifferenz zwischen dem Druck des die Druckwechseladsorption verlassenden Abgasstromes und dem gewählten Eintrittsdruck in die Membrantrennanlage ab. Die Reinheit des in der Membrantrennanlage gewonnenen hochreinen Kohlenmonoxidstromes wird lediglich dadurch begrenzt, daß das den Steamreformer verlassende Methan nahezu vollständig in dem in der Druckwechseladsorption anfallenden Abgasstrom enthalten ist. Auch kann bei einer wirtschaftlichen Verfahrensweise in der Membrantrennanlage der Wasserstoff nur bis zu einer Menge von 0,05 bis 1,0 Mol-% abgetrennt werden.

Eine Ausgestaltung der Erfindung ist dadurch gekennzeichnet, daß die Membrantrennanlage zweistufig ausgeführt ist.

Weiterhin wird vorgeschlagen, daß das in der ersten Stufe der Membrantrennanlage anfallende H₂-reiche Permeat als Brenngas, also z.B. zur Unterfeuerung des Steamreformers, verwendet wird. Das in der zweiten Stufe der Membrantrennanlage anfallende CO-reiche Permeat wird in den in der Druckwechseladsorption anfallenden Abgasstrom zurückgeführt.

Die Erfindung weiterbildend wird vorgeschlagen, daß der aus dem Steamreformer austretende, im wesentlichen Wasserstoff, Kohlenmonoxid und Kohlendioxid enthaltende Einsatzgasstrom vor dem Einleiten in die Amin-Wäsche einem Sekundärreformer, bei dem Sauerstoff als Vergasungsmittel verwendet wird, zugeführt wird.

Ein Nachteil des erfindungsgemäßen Verfahrens ist darin zu sehen, daß der, aus der Membrantrennanlage austretende hochreine Kohlenmonoxidstrom nahezu das gesamte Methan enthält. Soll nun die Methankonzentration noch weiter verringert werden, so kann dies durch den Einsatz eines zusätzlichen Reformerschrittes geschehen. Mittels dieser Ausgestaltung des erfindungsgemäßen Verfahrens kann im aus der Membrantrennanlage austretenden hochreinen Kohlenmonoxidstrom unter günstigsten Bedingungen eine Methankonzentration von weniger als 100 ppm CH₄ erreicht werden.

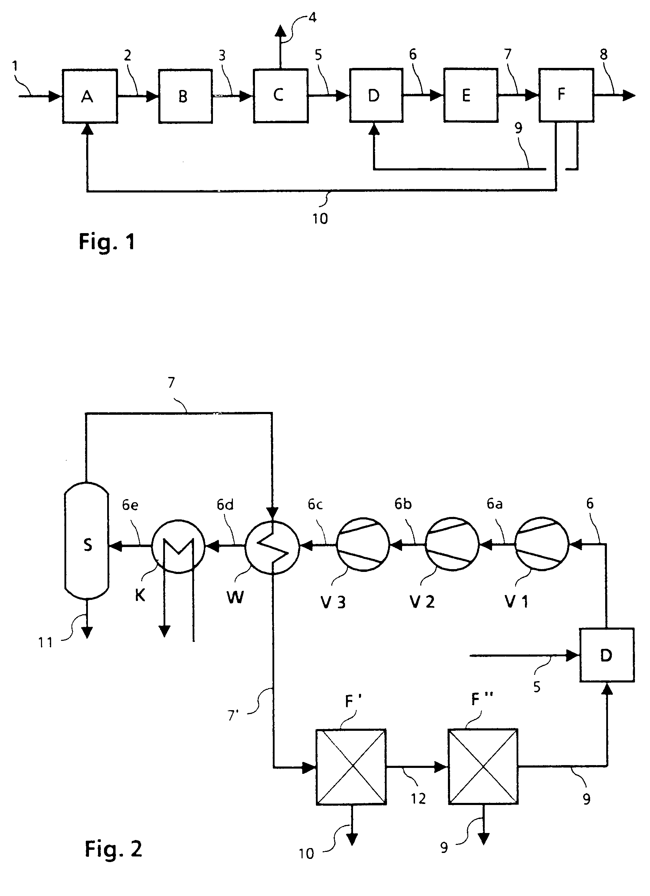

Die Erfindung sowie weitere Einzelheiten der Erfindung werden im folgenden anhand der Figuren 1 und 2 erläutert. Hierbei besitzen identische Anlagenteile gleiche Bezugszeichen.

**Figur 1** zeigt die Verfahrenskombination aus Steamreformer A, Amin-Wäsche zur Kohlendioxid-Abtrennung B, Druckwechseladsorption C, einem sogenannten Tailgaspuffer D, einer Tailgasverdichtung E und einer Membrantrennanlage F. Hierbei wird dem Steamreformer A über Leitung 1 z.B. Erdgas zugeführt. Das den Steamreformer A verlassende, im wesentlichen Wasserstoff, Kohlenmonoxid und Kohlendioxid enthaltende Einsatzgas gelangt über Leitung 2 in die Amin-Wäsche B und nach Abtrennung des Kohlendioxids über Leitung 3 in die Druckwechseladsorption C. Über Leitung 4 wird der hochreine Wasserstoffstrom aus der Druckwechseladsorption C abgezogen und über Leitung 5 der in der Druckwechseladsorption C anfallende Abgasstrom dem Tailgaspuffer D zugeführt. In diesem kommt es zu einer Vermischung des Abgasstromes aus Leitung 5 mit dem über Leitung 9 aus der Membrantrennanlage F zurückgeführten CO-reichen Permeatstrom. Der Tailgaspuffer D hat die Aufgabe, etwaige Volumensschwankungen in Leitung 5 und/oder Leitung 9 auszugleichen. Über Leitung 6 wird ein CO-reicher Strom in die Tailgasverdichtung E geleitet, in der eine ein- oder mehrstufige Verdichtung auf den Eingangsdruck der Membrantrennanlage F erfolgt. Der verdichtete Gasstrom wird über Leitung 7 der Membrantrennanlage F zugeführt und über Leitung 8 der hochreine Kohlenmonoxidstrom gewonnen. Bei einer zweistufigen Auslegung der Membrantrennanlage F fällt in der ersten Stufe ein H₂-reicher Permeatstrom an, der über Leitung 10 als Brenngas zum Steamreformer A zurückgeführt wird. In der zweiten Stufe der Membrantrennanlage F fällt ein CO-reicher Permeatstrom an, der, wie bereits erwähnt, über Leitung 9 dem Tailgaspuffer D bzw. dem Abgasstrom in Leitung 5 zugeführt wird.

**Figur 2** stellt einen Ausschnitt aus Figur 1 dar, nämlich die Verfahrensstufen D bis F. Die Membrantrennanlage ist hierbei zweistufig dargestellt (F', F''). Wie bereits in Figur 1 beschrieben, wird der aus der Druckwechseladsorption C stammende Abgasstrom (Leitung 5) im Tailgaspuffer D mit dem CO-reichen Permeatstrom (Leitung 9) vermischt. Der nunmehr vereinte Gasstrom wird über Leitung 6 dem ersten Verdichter V1, über Leitung 6a dem zweiten Verdichter V2 und anschließend über Leitung 6b der dritten Verdichterstufe V3 zugeführt. Über Leitung 6c wird der verdichtete Einsatzgasstrom zunächst im Wärmetauscher W gegen den später noch zu beschreibenden Verfahrensstrom in Leitung 7 abgekühlt und daran anschließend über Leitung 6d einem weiteren Kühler K zugeführt. Der Gasstrom in Leitung 6e wird im Kühler K soweit abgekühlt, daß im Abscheider S ein vollständiges Abtrennen des im Gasstrom enthaltenden Wassers erfolgt. Das Wasser verläßt die Anlage über Leitung 11. Am Kopf des Abscheiders S wird über Leitung 7 das vom Wasser befreite Gasgemisch abgezogen, im Wärmetauscher W zumindest soweit erwärmt, daß der Taupunkt des Gasgemisches weit überschritten ist und anschließend über Leitung 7' der ersten Stufe F' der Membrantrennanlage zugeführt. Während mittels Leitung 10 ein H₂-reicher Permeatstrom gewonnen und zum Steamreformer zurückgeführt werden kann, wird der verbleibende CO-reiche Gasstrom über Leitung 12 der zweiten Stufe F'' der Membrantrennanlage zugeführt. Aus dieser wird über Leitung 9 der bereits erwähnte CO-reiche Permeatstrom abgeführt und über Leitung 8 der hochreine Kohlenmonoxidstrom gewonnen. Es ist für den Fachmann selbstverständlich, daß das Zusammenführen der beiden Verfahrensströme 5 und 9 auch zwischen den einzelnen Verdichterstufe bzw. vor oder hinter der ein- oder mehrstufigen Verdichtung erfolgen kann.

Aus Tabelle 1 sind Zusammensetzung, Druck und Temperatur der wichtigsten Verfahrensströme ersichtlich. Die Differenz zwischen der Summe der Wasserstoff- und Kohlenmonoxid-Konzentration und 100 % resultiert aus der Tatsache, daß noch weitere Komponenten wie Kohlendioxid und Methan in den Verfahrensströmen enthalten sind.

**Tabelle 1**

| Leitung | Zusammensetzung | | Temperatur K | Druck bar |
|---|---|---|---|---|
| | H₂ Vol-%, | CO Vol-% | | |
| 5 | 52,0 | 46,9 | 313 | 9,7 |
| 7 | 58,8 | 40,8 | 314 | 28,6 |
| 8 | 1,2 | 98,1 | 314 | 27,2 |
| 9 | 70,6 | 29,2 | 314 | 1,4 |
| 10 | 95,1 | 4,4 | 314 | 1,4 |

## Patentansprüche

1. Verfahren zum Zerlegen eines aus einem Steamreformer stammenden, im wesentlichen Wasserstoff, Kohlenmonoxid und Kohlendioxid enthaltenden Einsatzgasstromes in einen hochreinen Wasserstoff- und einen hochreinen Kohlenmonoxidstrom, wobei der Einsatzgasstrom in einer Amin-Wäsche weitgehend von Kohlendioxid gereinigt wird, **dadurch gekennzeichnet,** daß
a) der nunmehr im wesentlichen Wasserstoff und Kohlenmonoxid enthaltende Gasstrom (3) zunächst einer Druckwechseladsorption (C) zugeführt und in dieser ein hochreiner Wasserstoffstrom (4) gewonnen wird, und
b) der in der Druckwechseladsorption (C) anfallende Abgasstrom (5) ein- oder mehrstufig verdichtet (E) und einer Membrantrennanlage (F) zugeführt und in dieser ein hochreiner Kohlenmonoxidstrom (8) gewonnen wird.

2. Verfahren nach Anspruch 1, dadurch gekennzeichnet, daß die Membrantrennanlage (F) zweistufig ausgeführt ist.

3. Verfahren nach Anspruch 2, dadurch gekennzeichnet, daß das in der ersten Stufe der Membrantrennanlage (F') anfallende H₂-reiche Permeat (10) als Brenngas, also z.B. zur Unterfeuerung des Steamreformers (A), verwendet wird.

4. Verfahren nach Anspruch 2 oder 3, dadurch gekennzeichnet, daß das in der zweiten Stufe der Membrantrennanlage (F'') anfallende CO-reiche Permeat (9) in den in der Druckwechseladsorption (C) anfallenden Abgasstrom (5) zurückgeführt wird.

5. Verfahren nach einem der Ansprüche 1 bis 4, dadurch gekennzeichnet, daß der aus dem Steamreformer (A) austretende, im wesentlichen Wasserstoff, Kohlenmonoxid und Kohlendioxid enthaltende Einsatzgasstrom (2) vor dem Einleiten in die Amin-Wäsche (B) einem Sekundärreformer, bei dem Sauerstoff als Vergasungsmittel verwendet wird, zugeführt wird.
